# EUROPÄISCHE PATENTANMELDUNG

(11) **EP 0 701 191 A1**
(43) Veröffentlichungstag der Anmeldung: **13.03.1996**
(21) Anmeldenummer: 95110127.8
(22) Anmeldetag: 24.06.1995
(51) Int. Cl.: G06F 1/18

(54) **Computergehäuse**

(30) Priorität: 25.08.1994 DE 9413577 U
(71) Anmelder: VOBIS MICROCOMPUTER AG, D-52146 Würselen (DE)
(72) Erfinder: Enders, Gerdrum, D-34119 Kassel (DE); Knierim, Andreas, D-34119 Kassel (DE); Wacholder, Kai, D-34131 Kassel (DE)
(74) Vertreter: Bauer, Wulf, Dr.

(57) **Zusammenfassung**

Das Computergehäuse, insbesondere für Personalcomputer, hat eine Frontplatte (18), in der mindestens ein Fenster (30) für ein Laufwerk (z.B. 34) mit austauschbarem Datenträger angeordnet ist. In der Frontplatte (18) ist eine rechteckförmige Öffnung (22) ausgebildet, in die einer von mindestens zwei unterschiedlich ausgebildeten Trägerrahmen (24, 25) eingefügt ist. Jeder Trägerrahmen (24, 25) hat mehrere Fenster (26, 28) für Laufwerke mit austauschbarem Datenträger.

## Beschreibung

Die Erfindung bezieht sich auf ein Computergehäuse, insbesondere auf ein Computergehäuse für Personalcomputer, das eine Frontplatte hat, in der mindestens ein Fenster für ein Laufwerk mit austauschbarem Datenträger angeordnet ist.

Bei Computergehäusen der hier in Rede stehenden Art gibt es zwei typische Ausführungen: Einerseits die sogenannten Tischgehäuse, andererseits die Standgehäuse. Die Frontplatte ist typischerweise länglich-rechteckig. Bei Tischgehäusen verlaufen die Längsseiten der rechteckförmigen Frontplatte parallel zur Unterstützungsfläche, also insbesondere einem Tisch. Bei Standgehäusen (tower) verläuft eine Schmalseite der rechteckförmigen Frontplatte parallel zur Standfläche, beispielsweise einem Boden.

Beim fertig zusammengebauten Computer sind die Fenster durch die Frontseiten von Laufwerken ausgefüllt. Computer sind typischerweise mit Laufwerken für Disketten, sogenannte Floppy-Disks, und zunehmend mehr und mehr auch mit Laufwerken für CD-ROMs ausgerüstet. Während die Anordnung der erstgenannten Laufwerke keine spezielle Ausrichtung erfordert, ist es bei CD-Laufwerken erforderlich, daß sie waagerecht eingebaut werden. CD-Laufwerke haben eine ein- und ausfahrbahre Lade, auf die der Datenträger, also die CD-Scheibe, gelegt wird.

Nach dem derzeitigen Stand der Technik werden für Tischgeräte und für Standgeräte unterschiedliche Gehäuse eingesetzt. Dies verringert die Flexibilität bei der Herstellung von Computern, macht aber auch eine größere Lagerhaltung, einen größeren Aufwand bei der Herstellung und Beschaffung und auch bei der Produktion erforderlich.

Ein weiterer Nachteil bei den vorgenannten Computergehäusen ist darin zu sehen, daß bei unterschiedlichen Ausstattungswünschen von Kunden das Gehäuse geändert werden muß. Für eine Standardausführung mit wenigen Laufwerken werden lediglich beispielsweise drei bis vier Fenster benötigt, während ein hochausgerüsteter Computer eine wesentlich größere Anzahl von Laufwerken aufweisen kann. Durch die unterschiedlichen Ausstattungen wird die Vielzahl der vorrätig zu haltenden Computergehäuse noch erhöht, die Produktion und alle sich darum abspielenden und anschließenden Vorgänge werden noch erschwert.

Hier setzt nun die Erfindung ein. Sie hat es sich zu Aufgabe gemacht, ein Computergehäuse anzugeben, das sowohl für Stand- als auch für Tischgeräte einsetzbar ist und das einfach umgestellt werden kann auf Ausführungen mit unterschiedlicher Anzahl von Laufwerken. Insbesondere soll es für den Einsatz eines CD-Laufwerks geeignet sein.

Gelöst wird diese Erfindung durch ein Computergehäuse mit den Merkmalen der eingangs genannte Art, bei dem in der Frontplatte eine rechteckförmige Öffnung ausgebildet ist und diese durch einen Trägerrahmen ausgefüllt ist, welcher aus mindestens zwei unterschiedlichen Trägerrahmen ausgewählt ist. Dabei haben die unterschiedlichen Trägerrahmen eine unterschiedliche Anzahl von Fenstern für Laufwerke.

Die Erfindung schlägt also vor, die Frontplatte baukastenartig aus mehreren Teilen aufzubauen. Es wird nicht mehr für jede unterschiedliche Ausstattung eine spezielle Frontplatte eingesetzt, insbesondere ist es nicht mehr nötig, eine Frontplatte für Standgehäuse und ein hiervon unterschiedlich ausgebildete Frontplatte für Tischgehäuse herzustellen und einzusetzen. Erfindungsgemäß wird vielmehr die Frontplatte dem jeweiligen Kundenwunsch dadurch angepaßt, daß in das Fenster der Frontplatte ein Trägerrahmen eingesetzt wird, der entsprechend der gewünschten Anzahl von Laufwerken die gewünschte Anzahl von Fenstern aufweist. Durch Auswahl des jeweiligen Trägerrahmens kann also die Frontplatte unterschiedlichen Anforderungen angepaßt werden.

Insbesondere ermöglicht es die Erfindung, jeweils einen Trägerrahmen vorzusehen, in dem einmal für ein Standgehäuse, einmal für ein Tischgehäuse ein Fenster, das dann im wesentlichen waagerecht verläuft, vorgesehen ist, in das ein CD-Laufwerk eingesetzt werden kann. Somit kann eine Frontplatte unterschiedlichen Anforderungen entsprechen.

In einer besonders vorteilhaften Ausbildung ist neben der Öffnung für einen auszuwählenden Trägerrahmen in der Frontplatte ein Fenster für ein Laufwerk in der Größe eines CD-Laufwerks angeordnet. Dieses Fenster verläuft vorzugsweise parallel zu einer Schmalseite der rechteckförmigen Frontplatte. Unmittelbar in seiner Nähe befindet sich die Öffnung für den Trägerrahmen. Es ist aber auch möglich, dieses außerhalb der Öffnung für den Trägerrahmen befindliche Fenster parallel zu einer Längsseite anzuordnen. Unabhängig von der konkreten Ausbildung wird auf diese Weise durch das zusätzliche Fenster erreicht, daß in einer Aufstellung des Gehäuses, sei es als Standgehäuse oder als Tischgehäuse, ein CD-Laufwerk in dieser separate Fenster eingebaut werden kann. Die andere Aufstellung wird dann dadurch erreicht, daß in einem der unterschiedlichen Trägerrahmen ein entsprechendes Fenster vorgesehen ist, das waagerecht ist, also eine praktische Benutzung eines CD-Laufwerks ermöglicht.

Vorzugsweise ist die Frontplatte aus Metallteilen und einem äußeren Abdeckteil, das beispielsweise aus Kunststoff ausgeführt sein kann, aufgebaut. Das Abdeckteil ist der jeweiligen, gewählten Konfiguration angepaßt, anders ausgedrückt gibt es mehrere, unterschiedliche Abdeckteile, entsprechend der Fensteranordnung, die entsteht, wenn ein metallisches Frontplattenteil, in dem die Öffnung vorgesehen ist, mit einem Trägerrahmen ausgestattet wird. Durch Einsatz unterschiedlicher Abdeckteile kann entsprechend der jeweils gewählten Konfiguration eine Frontplatte aufgebaut werden, bei der die Fensteröffnungen im äußeren Abdeckteil mit den jeweiligen Fenstern in den metallischen Teilen, also dem metallischen Frontplattenteil und dem ausgewählten Trägerrahmen, übereinstimmen.

Insgesamt ermöglicht die Erfindung somit den Aufbau unterschiedlicher Frontplatten für Computergehäuse aus Bausteinen. Zu den Bausteinen gehören a) ein im allgemeinen nur in einer Ausführung vorhandenes, metallisches Frontplattenteil, das die Öffnung aufweist und in der ein zusätzliches Fenster vorgesehen ist, b) unterschiedliche Trägerrahmen, die sich in der Zahl, Ausrichtung und Größe der Fenster für Laufwerke unterscheiden und c) äußere Abdeckteile, von denen wiederum unterschiedliche vorgesehen sind und die entsprechend der gewählten Fensterkonfiguration ausgewählt werden.

Erfindungsgemäß werden Lagerhaltung, Bestellung, Fertigung und spätere Aufrüstung eines Computers erheblich vereinfacht.

Als besonders bevorzugt hat sich eine Öffnung in dem metallischen Frontplattenteil erwiesen, die quadratisch ist. Dadurch kann man quadratische Trägerrahmen in zwei unterschiedlichen Ausrichtungen der Laufwerke anordnen. Wählt man diese Ausführung, so ist es möglich, mit nur einem Trägerrahmen zwei unterschiedliche Konfigurationen zu erstellen. In einer Minimalausbildung sind dann nicht zwei unterschiedliche Trägerrahmen, sondern nur einer erforderlich, der aber unterschiedlich angeordnet wird.

Weitere Vorzüge und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:
FIG. 1 eine Draufsicht auf eine Frontplatte eines Computergehäuses für ein Tischgehäuse, das äußere Abdeckteil ist abgenommen, gezeigt sind ein Frontplattenteil und ein Trägerrahmen,
FIG. 2 eine Darstellung entsprechend FIG. 1 für ein Standgehäuse,
FIG. 3 eine Darstellung entsprechend FIG. 2 für eine andere Ausführung und Aufteilung der Frontplatte eines Standgehäuses,
FIG. 4 eine perspektivische Darstellung eines Computergehäuses für ein Tischgerät und
FIG. 5 ein Montagebild der Teile einer Frontplatte für ein Standgerät.

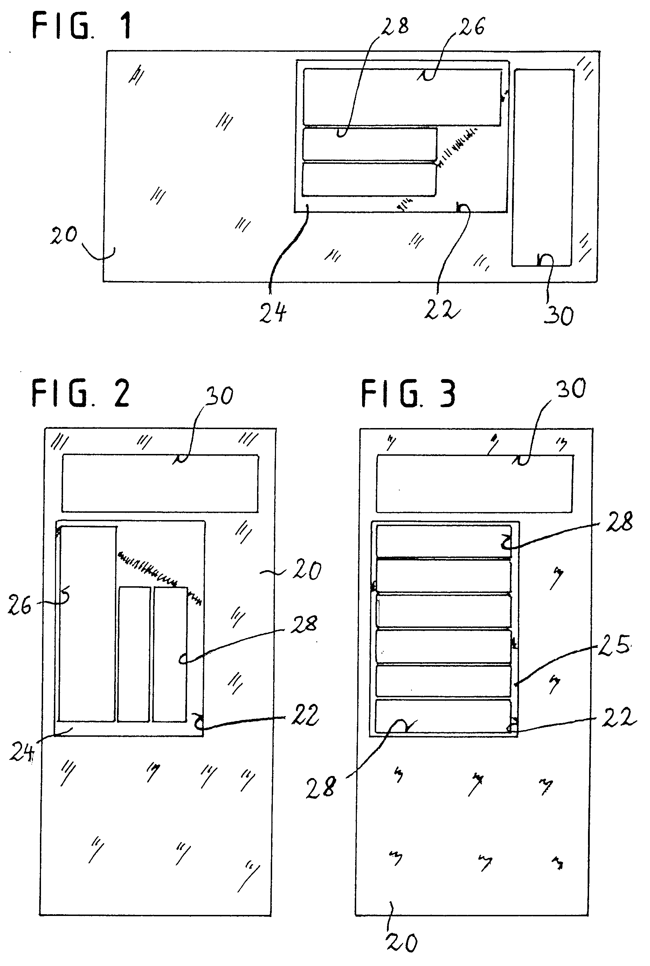

Wie FIG. 1 zeigt, gehört zur Frontplatte 18 ein metallisches Frontplattenteil 20, das sich über die gesamte Fläche der Frontplatte 18 erstreckt. Es ist rechteckförmig. In ihm ist eine Öffnung 22 ausgebildet, sie ist ebenfalls rechteckförmig. In die Öffnung 22 ist ein Trägerrahmen 24 eingesetzt. In ihm sind im besprochenen Ausführungsbeispiel nach FIG. 1 insgesamt drei Fenster 26, 28 vorgesehen, nämlich ein Fenster 26 für ein CD-Laufwerk bzw. ein Laufwerk für 5 1/4" Disketten und zwei Fenster 28 für Diskettenlaufwerke 3 1/2". Die Anordnung ist so getroffen, daß bei eingesetztem Trägerrahmen das Fenster 26, das für das CD-Laufwerk bestimmt ist, waagerecht verläuft. Ein CD-Laufwerk kann damit so eingebaut werden, daß seine Lade, auf die die CD aufgelegt wird, horizontal ein- und ausfährt, anders ausgedrückt die CD horizontal liegt.

Zusätzlich ist im Frontplattenteil und im Abstand von der Öffnung 22 noch ein Fenster 30 für ein 5 1/4" Laufwerk vorgesehen. Bei einem Tischgehäuse, dessen Frontplatte FIG. 1 zeigt, kann dieses Fenster 30 für eine 5 1/4" Festplatte mit auswechselbarem Datenträger oder ein 5 1/4" Diskettenlaufwerk verwendet werden.

FIG. 2 zeigt dasselbe Frontplattenteil 20 wie aus FIG. 1 mit denselben Trägerrahmen 24, der in die Öffnung 22 eingesetzt ist, unterschiedlich ist lediglich die Anordnung der Laufwerke, also die Ausnutzung der Fenster 26 und 30. Im Gegensatz zum Ausführungsbeispiel nach FIG. 1 ist die Frontplatte 18 zusätzlich für ein Standgerät vorgesehen. Das Fenster 30 erstreckt sich nunmehr waagerecht, in ihm ist das CD-Laufwerk sichtbar und hinter ihm angeordnet. Das Fenster 26 nimmt nun ein 5 1/4" Laufwerk der angesprochenen Art auf.

Mit denselben gerätemäßigen Voraussetzungen, nämlich dem Frontplattenteil 20 und dem Trägerrahmen 24, läßt sich also eine Frontplatte 18 eines Standgerätes und eines Tischgerätes aufbauen.

FIG. 3 zeigt nun den Frontplattenteil 20 aus den vorgegangenen Ausführungsbeispielen, in dessen Öffnung 22 nun jedoch ein anderer Trägerrahmen 25 eingesetzt ist. Es handelt sich wiederum um ein Standgerät, demgemäß ist das Fenster 30 im Ausführungsbeispiel nach FIG. 2 mit einem CD-Laufwerk bestückt. Der Trägerrahmen 24 ist aber nun für sechs Diskettenlaufwerke 3 1/2" ausgelegt. Anders ausgedrückt hat er sechs Fenster 26, 28 für entsprechende Diskettenlaufwerke und an seiner Rückseite die entsprechenden Befestigungsflansche 32, an denen die Laufwerke 33, 34 angeordnet sind, wie weiter unten noch erläutert werden wird.

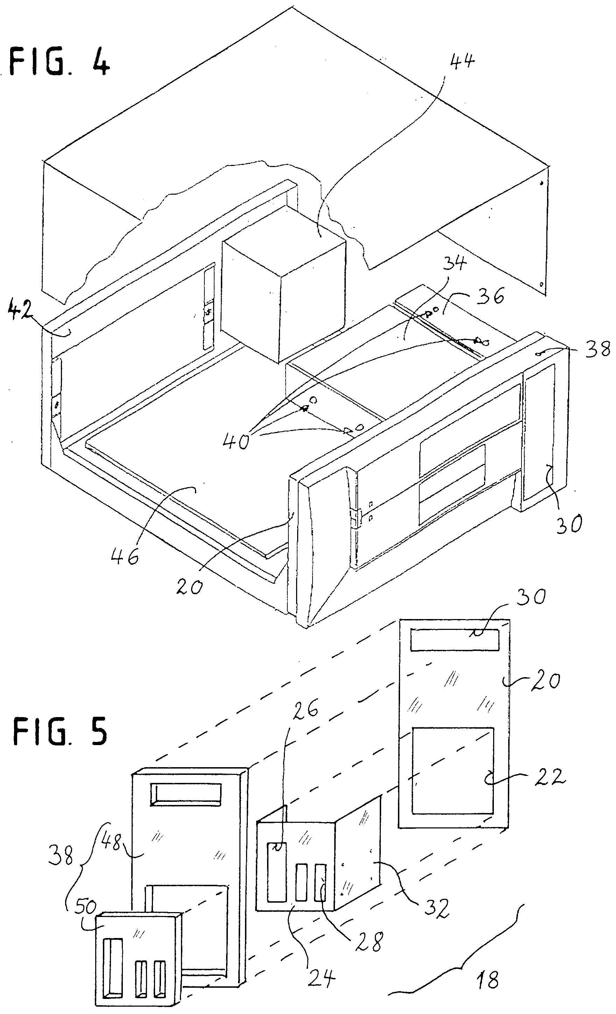

Aus FIG. 4 ist eine komplette Frontplatte, wie sie entsprechend den Figuren 1 bis 3 aufbaubar ist, in Verwendung für ein Tischgerät gezeigt. Verwendet wurde dabei das Frontplattenteil 20 und der in dessen Öffnung 22 angesetzte Trägerrahmen 24 nach FIG. 1. Außen ist diese Anordnung durch ein Abdeckteil 38 aus Kunststoff abgedeckt. Die Teile 20, 24 und 38 bilden die Frontplatte 18.

Vom Trägerrahmen 24 springt ein Befestigungsflansch 32 nach hinten vor, ebenso ist ein Befestigungsflansch 33 am Frontplattenteil 20 am Rand des Fensters 30 vorgesehen. Beide Befestigungsflansche 32, 33 dienen der Befestigung von Laufwerken 34, 36. Die Pfeile 40 deuten auf der Befestigung dienende Schrauben, die durch Löcher in den Befestigungsflanschen 32, 33 greifen und der Fixierung von Laufwerken 34 bzw. 36 dienen.

Der Frontplatte gegenüberliegend ist eine Rückwand 42 vorgesehen, an ihr ist ein Netzteil 44 befestigt. Auf einem Gehäuseboden ist eine Mutterplatine (motherboard) 46 befestigt.

Der modulare Aufbau einer Frontplatte 18 ist aus FIG. 5 ersichtlich, die zugleich eine weitere Variante zeigt. Ein metallisches Frontplattenteil 20 hat ein Fenster 30 für ein 5 1/4" Laufwerk, weiterhin weist es die Öffnung 22 auf. In sie ist der Trägerrahmen 24 einsetzbar, er hat insgesamt drei Fenster, nämlich ein Fenster 26 für ein 5 1/4" Laufwerk und zwei Fenster 28 für insgesamt zwei 3 1/2" Laufwerke. Der Trägerrahmen 24 hat einen kurzen und einen längeren Befestigungsflansch 24. Wie aus FIG. 5 ersichtlich ist, paßt der Trägerrahmen 24 genau in die Öffnung 22. Die Befestigung des Trägerrahmens 24 am Frontplattenteil 20 ist mit Mitteln, die dem Fachmann bekannt sind, realisierbar. Beispielsweise kann der Trägerrahmen 24 einen über die gezeigten Abmessungen stehenden Rand haben, der flächig auf dem Frontplattenteil 20 aufliegt. Das Frontplattenteil 20 kann aber auch spezielle Befestigungsmittel, beispielsweise Schraubenbolzen, für die Aufnahme eines entsprechend ausgebildeten Trägerrahmens aufweisen.

Im hier gezeigten Ausführungsbeispiel wird das Abdeckteil 38 aus zwei Kunststoffteilen zusammengesetzt, nämlich einem Basisteil 48 und einem Einsatz 50. Diese Ausbildung ermöglicht es, daß bei Austausch des Trägerrahmens 24 nur ein entsprechend passender Einsatz 50 mit ausgetauscht werden kann, das Basisteil 48 muß nicht geändert werden. Im Basisteil 48 ist eine Öffnung vorgesehen, die mit dem Fenster 30 fluchtet, ebenso hat der Einsatz 50 entsprechende Öffnungen für die Fenster 26, 28 des Trägerrahmens 24. Auf diese Weise sind die Laufwerke 34, 36 von außen zugänglich.

Unter mehreren Fenstern werden zwei, drei, vier, fünf usw. Fenster verstanden. Einige Laufwerke, beispielsweise 3 1/2 Zoll-Laufwerke lassen sich sowohl an ihrer schmalen, als auch an ihrer großen Seitenfläche schrauben. Insoweit ist es in FIG. 5 auch möglich, den Befestigungsflansch 32 um 90° zu drehen. Die Öffnung 22 wird in der Frontplatte 18 an einer Stelle vorgesehen, wo es nicht zu Kollisionen mit anderen Teilen, die im Computergehäuse eingebaut sind, kommen kann.

## Patentansprüche

1. Computergehäuse, insbesondere für Personalcomputer, mit einer Frontplatte (18), in der mindestens ein Fenster (30) für ein Laufwerk (z.B. 34) mit austauschbarem Datenträger angeordnet ist, dadurch gekennzeichnet, daß in der Frontplatte (18) eine rechteckförmige Öffnung (22) ausgebildet ist und daß in diese Öffnung (22) einer von mindestens zwei unterschiedlich ausgebildeten Trägerrahmen (24, 25) eingefügt ist und daß jeder Trägerrahmen (24, 25) mehrere Fenster (26, 28) für Laufwerke mit austauschbarem Datenträger aufweist.

2. Computergehäuse nach Anspruch 1, mit einer rechteckförmigen Frontplatte (18), die von zwei Schmalseiten und zwei Längsseiten begrenzt ist, dadurch gekennzeichnet, daß in Nähe einer Schmalseite und parallel zu dieser ein Fenster (30) für ein Laufwerk (34) von der Größe eines CD-Laufwerks vorgesehen ist.

3. Computergehäuse nach Anspruch 1 oder 2, dadurch gekennzeichnet, daß die Frontplatte (18) aus einem metallischen Frontplattenteil (20), das die Öffnung (22) aufweist, in der einer der mindestens zwei unterschiedlichen Trägerrahmen (24, 25) einsetzbar ist, und aus einem äußeren Abdeckteil (38) zusammengesetzt ist, wobei mindestens zwei unterschiedliche Abdeckteile (38) vorgesehen sind, die sich dadurch unterscheiden, daß ein Abdeckteil (38) einem Trägerrahmen (24) und das andere Abdeckteil (38) einem hiervon unterschiedlichen, anderen Trägerrahmen (25) zugeordnet ist.

4. Computergehäuse nach Anspruch 1, dadurch gekennzeichnet, daß die Öffnung (22) in der Frontplatte (18) quadratisch ist und daß die Trägerrahmen (24, 25) ebenfalls quadratisch ausgebildet sind.

5. Computergehäuse nach Anspruch 2, dadurch gekennzeichnet, daß mindestens ein Trägerrahmen (24, 25) ein Fenster (26) für ein Laufwerk von der Größe eines CD-Laufwerks hat und daß im eingebauten Zustand dieses Trägerrahmens (24) das genannte Fenster (26) im rechten Winkel zum in der Frontplatte (18) vorgesehenen Fenster (30) für ein Laufwerk in der Größe eines CD-Laufwerks angeordnet ist.

6. Computergehäuse nach Anspruch 3, dadurch gekennzeichnet, daß der Trägerrahmen (24) einen Rand aufweist, der zwischen dem äußeren Abdeckteil (38) und dem metallischen Frontplattenteil (20) angeordnet ist.

7. Computergehäuse nach einem der Ansprüche 1 bis 5, dadurch gekennzeichnet, daß der Trägerrahmen (24) rückseitig auf der Frontplatte (18) aufgeschraubt ist.

8. Computergehäuse nach einem der Ansprüche 1 bis 7, dadurch gekennzeichnet, daß der Trägerrahmen (24) quer von ihm wegstehende und von der Rückseite der Frontplatte (18) abstehende Befestigungsflansche (32,33) für Laufwerke aufweist, wobei jedem Fenster (26, 28) mindestens ein Befestigungsflansch zugeordnet ist.

9. Computergehäuse nach Anspruch 1, dadurch gekennzeichnet, daß jeder Trägerrahmen (24, 25) zumindest drei Fenster (26, 28) für Laufwerke mit austauschbarem Datenträger aufweist.

10. Computergehäuse nach Anspruch 2, dadurch gekennzeichnet, daß jeder das Fenster (30) für ein Laufwerk (34) von der Größe eines CD-Laufwerks außerhalb der Öffnung (22) vorgesehen ist.
